# EUROPEAN PATENT APPLICATION

(11) **EP 4 467 224 A1**
(43) Date of publication of application: **27.11.2024**
(21) Application number: 22922298.9
(22) Date of filing: 17.06.2022
(51) Int. Cl.: B01D 53/14, B01D 53/78, B01D 53/79, B01D 47/06, C02F 1/66, C01D 7/00, B04B 5/10

(54) **SYSTEM FOR CARBON DIOXIDE CAPTURE AND CARBON RECYCLING FOR STEEL MILL**

(30) Priority: 21.01.2022 KR 20220009529
(71) Applicant: Lowcarbon Co., Ltd., Seongjeon-myeon, Gangjin-gun Jeollanam-do 59205 (KR)
(72) Inventor: LEE, Cheol, Cheongju-si Chungcheongbuk-do 28709 (KR)
(74) Representative: M. Zardi & Co S.A.
(86) International application number: PCT/KR2022/008627
(87) International publication number: WO 2023/140439

(57) **Abstract**

Proposed is a system for carbon dioxide capture and carbon recycling for a steel mill. The system includes a fluidized bed reduction furnace configured to reduce fine iron ore to reduced iron by using a reducing gas, a first discharge means configured to discharge an exhaust gas generated from the fluidized bed reduction furnace, a melting furnace configured to manufacture molten iron, a second discharge means configured to discharge an exhaust gas generated from the melting furnace, and a reactor configured such that when the reactor receives the exhaust gas discharged from the fluidized bed reduction furnace and the melting furnace as the reducing gas, the reactor captures carbon dioxide in the reducing gas by reacting the reducing gas with a basic alkaline mixture solution, and then collects a reactant and injects, into the fluidized bed reduction furnace, the reducing gas from which carbon dioxide is removed.

## Description

### Technical Field

The present disclosure relates to a system for carbon dioxide capture and carbon recycling for a steel mill. More particularly, the present disclosure relates to a system for carbon dioxide capture and carbon recycling for a steel mill, the system being configured to capture and convert carbon dioxide in an exhaust gas into a carbon resource by using a basic alkaline mixture solution, thereby being capable of removing carbon dioxide in the steel mill and also capable of utilizing carbon dioxide such that carbon dioxide is converted into other useful materials.

### Background Art

The steel industry is an industry in which carbon dioxide emissions are bound to be high due to the nature of using fossil fuel as the main raw material, and accounts for 7% to 9% of carbon dioxide emitted from fossil fuel.

According to the World Steel Association, an average of 1.83 tons of carbon dioxide is emitted while one ton of steel is produced, and the steel industry accounts for the largest proportion of carbon dioxide emissions from all industries at 24%.

Recently, all-out efforts are being made around the world to accelerate the transition to a carbon-free society and, accordingly, the steel industry is also conducting research and development on Carbon Capture and Utilization (CCU) technology.

Meanwhile, a conventional steel manufacturing process is performed in the order of an iron manufacturing process, a steel manufacturing process, a continuous casting process, and a rolling process. Particularly, since a large amount of carbon is used as a reduction agent an iron manufacturing furnace producing pig iron by reducing iron ore, the iron manufacturing process is directly related to the generation of carbon dioxide. As a result, it was found that carbon dioxide generated in the iron manufacturing process accounts for 80% of the amount of carbon dioxide generated in the entire steel mill.

In addition, in the conventional iron manufacturing process, a blast furnace method in which iron ore that has undergone a sintering process and coke manufactured using bituminous coal as a raw material are injected into a blast furnace and then oxygen is blown into the blast furnace to manufacture molten iron is used. According to the blast furnace method, auxiliary facilities such as a coke manufacturing facility for manufacturing bituminous coal into coke, a sintering facility for performing the sintering process of iron ore, and so on are required to be provided. In addition, since environmental pollutants are discharged from the auxiliary facilities, there is a problem that a complex purification facility for purifying environmental pollutants is required to be provided along with the auxiliary facilities.

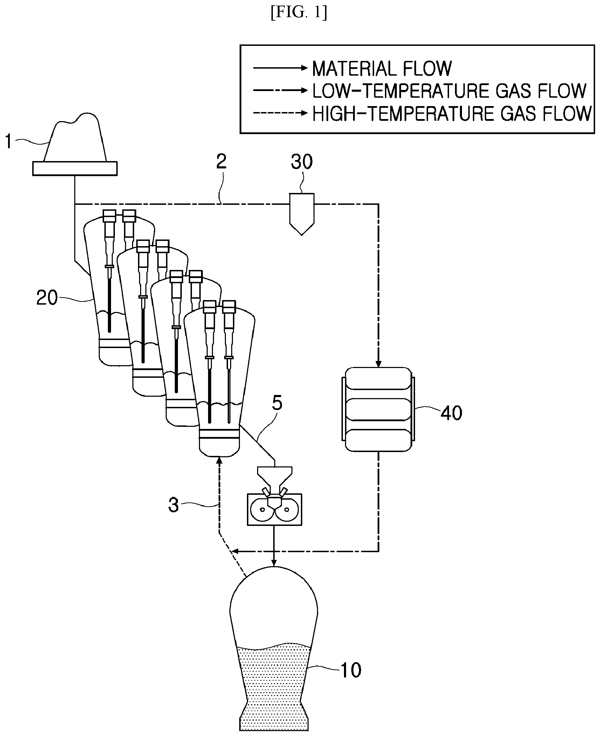

Therefore, in the steel industry, the blast furnace method is replaced with a smelting reduction method. The smelting reduction method is also referred to as a FINEX method. As illustrated in FIG. 1, the conventional FINEX process includes a fluidized bed reduction furnace configured to reduce fine iron ore, a melting (gasification) furnace configured to manufacture molten iron by melting the reduced fine iron ore and ordinary coal and configured to produce gas, and a CO₂ Pressure Swing Adsorption (PSA) configured to reduce carbon dioxide in a FINEX OFF GAS (FOG). Here, the PSArefers to a technology in which gas is separated by using a difference in the amount of adsorption according to a pressure difference by using an adsorption agent that adsorbs a specific gas.

However, in the CO₂ PSA technology, there is a process problem in which a temperature of 15 degrees Celsius to 40 degrees Celsius and a pressure of 4 bar to 6 bar, which are typical adsorption conditions, are required to be satisfied, and there is a difficulty in selecting an adsorption agent having a high CO₂ adsorption performance at a CO₂ adsorption pressure.

As such, in the method of reducing carbon dioxide by using the CO₂ PSA technology in the conventional steel manufacturing process, there is a problem that the adsorption condition and the adsorption agent performance condition for applying the CO₂ PSA technology are required to be satisfied.

Therefore, there is an urgent need for a method of efficiently capturing carbon dioxide emitted from a steel mill in a simple manner compared to the conventional technology.

In addition, as a carbon dioxide capture technology has recently been developed, carbon dioxide capture products have been generated, but technology for utilizing or storing generated carbon dioxide capture products has not yet been developed, so that technology development is required.

### Disclosure

### Technical Problem

Accordingly, the present disclosure has been made keeping in mind the above problems occurring in the related art, and an objective of the present disclosure is to provide a system for reducing carbon dioxide in an exhaust gas generated during an iron manufacturing process in a steel mill.

In addition, another objective of the present disclosure is to provide a system for carbon dioxide capture and carbon recycling for a steel mill, the system being configured to use a basic alkaline mixture solution such that carbon dioxide in an exhaust gas is captured and converted into a carbon resource so that carbon dioxide is removed and also carbon dioxide is recycled into other useful carbon resources.

In addition, still another objective of the present disclosure is to provide a system for carbon dioxide capture and carbon recycling for a steel mill, the system being capable of capturing carbon dioxide in an exhaust gas generated during an iron manufacturing process in the steel mill and converting the captured carbon dioxide into a carbon resource and then storing and transporting the converted carbon resource into an offshore structure.

In addition, yet another objective of the present disclosure is to provide a system for carbon dioxide capture and carbon recycling for a steel mill, the system being capable of reducing an oxidation level of a reducing gas injected by reducing carbon dioxide before the reducing gas is injected into a melting furnace, thereby being capable of increasing a Direct Reduced Iron (DRI) reduction rate.

The technical problems to be solved by the present disclosure are not limited to the above-mentioned problems, and other problems which are not mentioned will be clearly understood by those skilled in the art from the following description.

### Technical Solution

In order to achieve the above objectives, according to an embodiment of the present disclosure, there is provided a system for carbon dioxide capture and carbon recycling for a steel mill, the system including: at least one fluidized bed reduction furnace configured to reduce fine iron ore to reduced iron by reacting the fine iron ore with a reducing gas; a first discharge means configured to discharge an exhaust gas generated from the at least one fluidized bed reduction furnace; a melting furnace connected to the fluidized bed reduction furnace and configured to manufacture molten iron by melting the reduced iron manufactured in the fluidized bed reduction furnace; a second discharge means configured to discharge an exhaust gas generated from the melting furnace; and a reactor connected respectively to the first discharge means and the second discharge means, the reactor being configured such that when the reactor receives the exhaust gas respectively discharged from the fluidized bed reduction furnace and the melting furnace as the reducing gas, the reactor captures carbon dioxide in the reducing gas by reacting the reducing gas with a basic alkaline mixture solution, and then collects a reactant containing the captured carbon dioxide and injects, into the fluidized bed reduction furnace, the reducing gas from which carbon dioxide is removed, wherein the reactor is configured to separate a carbon dioxide reactant and a waste solution from the reactant, and is configured to store the separated carbon dioxide reactant so as to recycle the carbon dioxide reactant.

In addition, the reducing gas may be a mixture gas of a FINEX OFF GAS (FOG) that is the exhaust gas generated from the fluidized bed reduction furnace and a melting furnace exhaust gas that is the exhaust gas generated from the melting furnace.

In addition, the basic alkaline mixture solution may include: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄0₇·10H₂O), sodium hydroxide (NaOH), sodium silicate (Na₂SiO₃), potassium hydroxide (KOH), and hydrogen peroxide (H₂O₂).

In addition, the reactor may include: a mixer configured to supply the basic alkaline mixture solution; an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower; a separator configured to collect a reactant containing carbon dioxide captured in the absorption tower and to separate the carbon dioxide reactant and the waste solution from the reactant; and a carbon resource storage unit storing the separated carbon dioxide reactant for recycling the carbon dioxide reactant.

In addition, the mixer may be configured to generate the basic alkaline mixture solution by mixing a basic alkaline solution supplied from a basic alkaline solution storage with water supplied from a water supply source.

In addition, the basic alkaline solution and the water may be mixed in a ratio of 1:1 to 1:5.

In addition, an average pH of the basic alkaline mixture solution may be pH 12 to pH 13.5.

In addition, the basic alkaline mixture solution may be input by being adjusted through a valve in the mixer when a level of the basic alkaline mixture solution in the absorption tower is lowered to less than 90%, and inputting of the basic alkaline mixture solution is stopped and, at the same time, the basic alkaline solution and water may be mixed until a pH of the basic alkaline mixture solution becomes pH 12 to pH 13.5 when the level of the basic alkaline mixture solution becomes 100%.

In addition, the bubbler may be configured to form exhaust gas micro bubbles by using the exhaust gas.

In addition, the absorption tower may include: a spraying apparatus including a spraying chamber which is connected to the mixer and inserted inside the absorption tower by penetrating a first region in the absorption tower and which is configured to receive the basic alkaline mixture solution, the spraying apparatus including a plurality of spraying pipes which have a plurality of spraying holes for spraying the basic alkaline mixture solution and which is inclinedly connected to the spaying chamber; a fine droplet member configured such that the basic alkaline mixture solution sprayed from the spraying apparatus is brought into contact with pores and forms fine droplets when the basic alkaline mixture solution falls downward; and a baffle having a plurality of slits or holes such that the exhaust gas is capable of being introduced inside the absorption tower with a uniform speed distribution.

In addition, the plurality of spraying holes formed in any one of the plurality of spraying pipes may be formed in a position symmetrically staggered with the plurality of spraying holes formed in the adjacent spraying pipes.

In addition, the carbon dioxide reactant may include sodium carbonate (Na₂CO₃) or sodium bicarbonate (NaHCO₃).

In addition, the separator may include: a centrifuge configured to separate the waste solution and the carbon dioxide reactant containing sodium carbonate (Na₂CO₃) or sodium bicarbonate (NaHCO₃) from the reactant; and a vibration separation membrane formed corresponding to an inner circumference of a discharge pipe for discharging only sodium bicarbonate in the carbon dioxide reactant, the vibration separation membrane having a surface provided with fine holes formed in a size capable of allowing carbon bicarbonate to pass therethrough.

In addition, the reactor may further include: a monitoring part configured to monitor a level and a pH of the basic alkaline mixture solution in the absorption tower; and a control part configured to adjust a supply amount of the basic alkaline mixture solution by the monitoring part.

In addition, the carbon resource storage unit may include: an offshore structure accommodating the carbon dioxide reactant; an inlet unit configured to load the carbon dioxide reactant to the offshore structure; a discharge unit connected to the offshore structure and configured to unload the carbon dioxide reactant in the offshore structure; and a control unit configured to control the inlet unit and the discharge unit during loading/unloading of the carbon dioxide reactant accommodated in the offshore structure.

In addition, the offshore structure may be any one selected from an LNG FPSO, an LNG FSRU, an LNG transport ship, and an LNG RV.

### Advantageous Effects

According to embodiments of the present disclosure, the following effects may be realized. However, the embodiments may not include all these effects, and a claim scope of the present disclosure is not construed as being limited thereto.

According to an embodiment of the present disclosure, carbon dioxide may be reduced by capturing carbon dioxide in the exhaust gas discharged during the iron manufacturing process that is one process of the steel manufacturing process, and sodium carbonate or sodium bicarbonate that are useful resources may be manufactured by using the captured carbon dioxide.

In addition, according to an embodiment of the present disclosure, carbon dioxide is captured by using the basic alkaline mixture solution that solves a disadvantage of the CO₂ PSA technology used in the conventional steel manufacturing process, and the captured carbon dioxide reactant may be utilized in various industrial fields such as food additives, detergents, soap raw materials, high-tech medical industries, wastewater treatment, and so on, so that profit generation is capable of being realized and economic efficiency compared to the conventional technologies is capable of being secured.

In addition, according to an embodiment of the present disclosure, since the carbon dioxide reactant generated due to carbon dioxide capture is stored and transported to the offshore structure by considering that the steel mill is generally positioned on the beach for the procurement of raw materials, the storage cost and the transportation cost may be reduced, and the stored carbon resource may be used later when the stored carbon resource is required.

In addition, according to an embodiment of the present disclosure, the DRI reduction rate in the FINEX process may be increased by reducing the content of carbon dioxide in the reducing gas introduced into the FINEX fluidized bed reduction furnace.

### Description of Drawings

FIG. 1 is a schematic view illustrating a conventional FINEX process.
FIG. 2 is a view illustrating a configuration of a system for carbon dioxide capture and carbon recycling for a steel mill according to an embodiment of the present disclosure.
FIG. 3 is a view illustrating a FINEX process according to an embodiment of the present disclosure.
FIG. 4 is a view illustrating a reactor according to an embodiment of the present disclosure.
FIG. 5 is a view schematically illustrating an internal configuration of an absorption tower for improving carbon dioxide capture performance of the reactor according to an embodiment of the present disclosure.

### Mode for Invention

Since the present disclosure may be variously modified and have several exemplary embodiments, specific exemplary embodiments will be shown in the accompanying drawings and be described in detail in a detailed description.

However, it should be understood that the specific embodiments according to the concept of the present disclosure are not limited to the embodiments which will be described hereinbelow with reference to the accompanying drawings, but all of modifications, equivalents, and substitutions are included in the scope and spirit of the present disclosure.

It is to be understood that terms such as "including", "having", and so on are intended to indicate the existence of the features, numbers, steps, actions, elements, components, or combinations thereof disclosed in the specification, and are not intended to preclude the possibility that one or more other features, numbers, steps, actions, elements, components, or combinations thereof may exist or may be added.

FIG. 1 is a schematic view illustrating a conventional FINEX process.

Reduced iron is acquired by reducing the fine iron ore 1 having a particle diameter of equal to or less than 8 mm through a fluidized bed reduction furnace 20. In this process, a FINEX OFF GAS (FOG) 2 is input into the fluidized bed reduction furnace 20 together with a melting furnace gas 3 through a scrubber 30 and a CO₂ Pressure Swing Adsorption 40.

The fluidized bed reduction furnace 20 may be provided with a plurality of fluidized bed reduction furnaces 20. For example, when four fluidized bed reduction furnaces are provided, a structure in which a reducing gas in injected into an R1 fluidized bed reduction furnace and sequentially flows to an R2 fluidized bed reduction furnace, an R3 fluidized bed reduction furnace, and an R4 fluidized bed reduction furnace. Conversely, fine iron ore is loaded into the R4 fluidized bed reduction furnace and then flows to the R1 fluidized bed reduction furnace in the reverse order may be provided. Afterwards, the reduced iron passes through a melting furnace 10. In a process of manufacturing ore into a Direct Reduced Iron (DRI) by using the fluidized bed reduction furnace 20, generally, ore is reduced by using a mixture gas containing CO, CO₂, H₂, N₂, steam, and so on.

Some of the reducing gases used in a conventional FINEX process are supplied to a power plant, and other parts of the reducing gases are injected again into the fluidized bed reduction furnace 20 together with the reducing gas from which CO₂ is reduced by the CO₂ PSA 40 and which is generated in the melting furnace 10. At this time, the carbon dioxide concentration is about 10%, and the DRI reduction rate in the process is about 60% to 70%.

The present disclosure relates to a system for carbon dioxide capture and carbon recycling for a steel mill, the system being capable of reducing carbon dioxide by capturing carbon dioxide while a CO₂ PSA facility required in a conventional FINEX process is omitted, and the system being capable of manufacturing sodium carbonate or sodium bicarbonate, which are useful resources, by using the captured carbon dioxide.

The system for carbon dioxide capture and carbon recycling system for the steel mill according to an embodiment of the present disclosure will be described in more detail with reference to the following drawings.

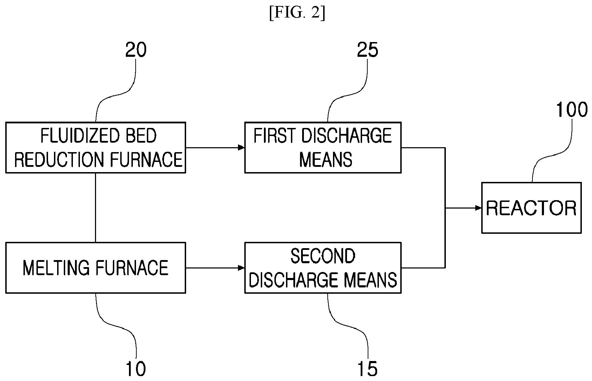

FIG. 2 is a view illustrating a configuration of the system for carbon dioxide capture and carbon recycling for the steel mill according to an embodiment of the present disclosure.

Referring to FIG. 2, the system for carbon dioxide capture and carbon recycling for the steel mill according to an embodiment of the present disclosure may include: at least one fluidized bed reduction furnace 20 configured to reduce fine iron ore 1 to reduced iron by reacting the fine iron ore 1 with a reducing gas; a first discharge means 25 configured to discharge an exhaust gas generated in the at least one fluidized bed reduction furnace 20; the melting furnace 10 connected to the fluidized bed reduction furnace 20 and configured to manufacture molten iron by melting the reduced iron manufactured in the fluidized bed reduction furnace 20; a second discharge means 15 configured to discharge an exhaust gas generated in the melting furnace 10; and a reactor 100 connected respectively to the first discharge means 25 and the second discharge means 15, the reactor 100 being configured such that when the reactor 100 receives the exhaust gas respectively discharged from the fluidized bed reduction furnace 20 and the melting furnace 10 as a reducing gas, the reactor 100 captures carbon dioxide in the reducing gas by reacting the reducing gas with a basic alkaline mixture solution, and then collects a reactant containing the captured carbon dioxide and injects, into the fluidized bed reduction furnace 20, the reducing gas from which the carbon dioxide is removed. Through this, the DRI reduction rate may be increased by improving an oxidation degree of a reducing gas that reduces a loaded ore by reducing carbon dioxide in the composition of the reducing gas injected during the manufacturing of DRI through the FINEX process.

The reducing gas input into the fluidized bed reduction furnace 20 may be at least one gas selected from a group consisting of a FINEX OFF GAS (FOG), a Blast Furnace off Gas (BFG), a Coke Oven Gas (COG), a Water Gas Shift Reactor (WGSR), and a melting furnace off gas. That is, the reducing gas may be the at least one gas selected from the group, or may be a mixture of at least two gases. Preferably, the reducing gas is a mixture gas of a FOG and a melting furnace off gas that have not gone through the CO₂ PSA.

The reducing gas is a mixture gas of the FOG that is the exhaust gas generated in the fluidized bed reduction furnace 20, and the melting furnace exhaust gas that is the exhaust gas generated in the melting furnace 10.

Such a reducing gas may be transmitted to the reactor 100 by the first discharge means 25 and the second discharge means 15. The reactor 100 may react the reducing gas with the basic alkaline mixture solution so that carbon dioxide in the reducing gas is captured, and then may collect the reactant containing the captured carbon dioxide and may inject, into the fluidized bed reduction furnace 20, the reducing gas from which carbon dioxide is removed.

Specifically, the reactor 100 may receive the exhaust gas and may capture carbon dioxide in the exhaust gas by reacting the exhaust gas with the basic alkaline mixture solution, may collect the reactant containing the captured carbon dioxide, may separate a carbon dioxide reactant and a waste solution from the reactant, may collect and store the carbon dioxide reactant, and may discharge a residual exhaust gas from which the captured carbon dioxide is removed. Here, the carbon dioxide reactant includes sodium carbonate (Na₂CO₃) or sodium bicarbonate (NaHCO₃), and the residual exhaust gas is the reducing gas from which carbon dioxide input into the fluidized bed reduction furnace 20 is removed.

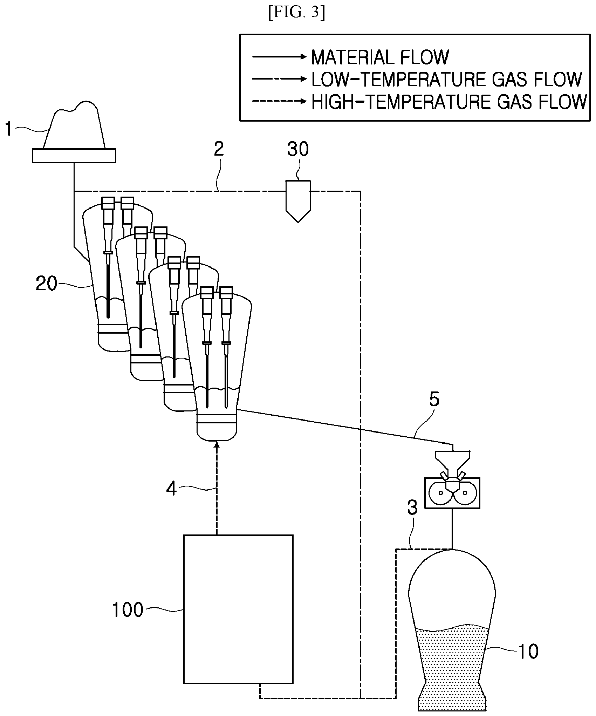

FIG. 3 is a view illustrating a FINEX process according to an embodiment of the present disclosure.

Referring to FIG. 3, in the FINEX process according to an embodiment of the present disclosure, the reduced iron 5 is acquired by reducing the fine iron ore 1 through the fluidized bed reduction furnace 20 and, in this process, the FOG 2 passing through the scrubber 30 and the reactor 100 is transmitted to the fluidized bed reduction furnace 20 along with the melting furnace gas 3 that is discharged from the melting furnace 10.

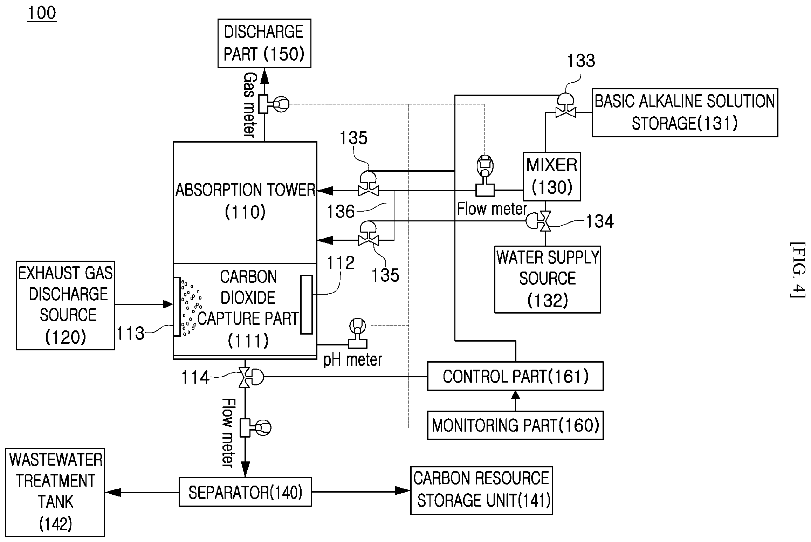

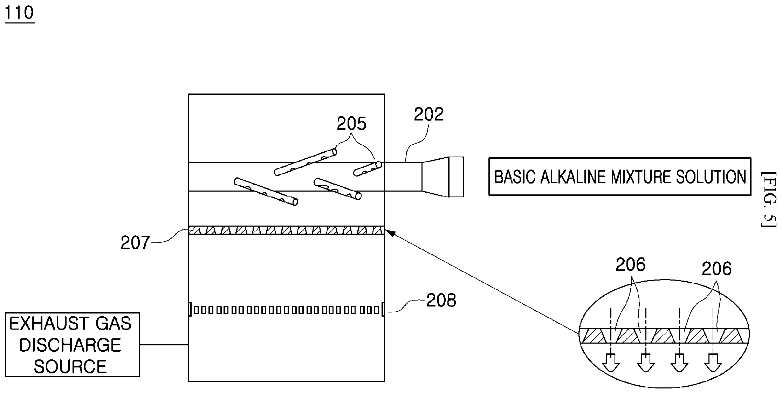

Here, the reactor 100 reduces the content of carbon dioxide in the reducing gas input into the FINEX fluidized bed reduction furnace 20, and transmits the reducing gas from which carbon dioxide is reduced to the FINEX fluidized bed reduction furnace 20. The configuration of the reactor 100 will be described in detail with reference to FIG. 4 and FIG. 5.

FIG. 4 is a view illustrating the reactor 100 according to an embodiment of the present disclosure.

Referring to FIG. 4, the reactor 100 according to an embodiment of the present disclosure has a structure capable of reducing carbon dioxide by capturing carbon dioxide in the exhaust gas discharged during an iron manufacturing process that is one process of a steel manufacturing process, and capable of performing carbon recycling by converting carbon dioxide into sodium carbonate or sodium bicarbonate by using the captured carbon, the exhaust gas being the reducing gas input into the FINEX fluidized bed reduction furnace.

Specifically, the reactor 100 according to an embodiment of the present disclosure is a reactor configured to capture carbon dioxide in the exhaust gas by using the basic alkaline solution, the exhaust gas being respectively discharged from the fluidized bed reduction furnace 20 and the melting furnace 10 by the first discharge means 25 and the second discharge means 15 and being a mixture gas. Furthermore, the reactor 100 includes an absorption tower 110, a carbon dioxide capture part 111, an exhaust gas discharge source 120, a mixer 130, a separator 140, a carbon resource storage unit 141, and a discharge part 150.

The absorption tower 110 may refer to a facility, a building, an equipment, and so on capturing carbon dioxide. In addition, the carbon dioxide capture part 111 positioned on a lower end of the absorption tower 110 is a portion of the absorption tower 110, and may refer to a portion that captures carbon dioxide by bubbling the exhaust gas.

The absorption tower 110 includes the carbon dioxide capture part 111 at the lower end of the absorption tower 110, and is configured to capture only carbon dioxide in the exhaust gas by reacting the basic alkaline mixture solution with the exhaust gas (micro bubbles of the exhaust gas) discharged during the iron manufacturing process in the steel mill. After carbon dioxide in the exhaust gas is captured, the exhaust gas from which carbon dioxide is removed may remain in a gaseous state in the absorption tower 110.

A nozzle is mounted on an upper portion of the absorption tower 110, the basic alkaline mixture solution is sprayed inside the absorption tower 110 through the nozzle, and the basic alkaline mixture solution is collected in the carbon dioxide capture part 111 positioned at the lower end of the absorption tower 110. At the same time as the basic alkaline mixture solution is sprayed, the exhaust gas supplied from the exhaust gas discharge source 120 passes through a bubbler 113 in the carbon dioxide capture part 111 at the lower portion of the absorption tower 110, the exhaust gas in which micro bubbles are formed is supplied, and the basic alkaline mixture solution and the micro bubbles of the exhaust gas react with each other within the carbon dioxide capture part 111, so that carbon dioxide is captured. When the exhaust gas reacts with the basic alkaline mixture solution, the micro bubbles are formed while the exhaust gas passes through the bubbler 113 having fine holes formed on an outlet of the exhaust gas discharge source 120.

As the exhaust gas supplied from the exhaust gas discharge source 120 passes through the bubbler 113, the bubbler 113 may form the micro bubbles in the exhaust gas. Furthermore, the smaller the size of the micro bubbles, the larger the reaction area of the exhaust gas and the alkaline solution, so that the carbon dioxide capture ability may be increased. For example, the micro bubbles may refer to bubbles which have a size about equal to or less than 50 µm and which exist in an aqueous solution.

In addition to the bubbler 113, as illustrated in FIG. 5, a baffle 208 may be provided, the baffle 208 having a plurality of slits or holes such that the exhaust gas is introduced inside the absorption tower with a uniform speed distribution.

In addition, the absorption tower 110 may include a level indicator inside the absorption tower 110, so that a level of a solution in the absorption tower 110 is capable of being detected.

The nozzle may include a plurality of nozzles, and may be formed of at least one stage. The nozzle is connected to the mixer 130, and may supply the basic alkaline mixture solution from the mixer 130.

The absorption tower 110 may be configured in series, in parallel, or in a series and parallel complex arrangement.

For example, the absorption tower 110 may be arranged in series when the flow velocity of the exhaust gas is high. When carbon dioxide unreacted due to a high flow velocity is discharged from the absorption tower, the absorption tower may be mounted in series so as to capture the unreacted carbon dioxide.

In addition, for example, the absorption tower 110 may be arranged in parallel when the flow rate of the exhaust gas is large. When the flow rate of the exhaust gas exceeds the amount that the absorption tower can capture, the amount of carbon dioxide that can be captured may be increased by arranging the absorption tower in parallel.

The exhaust gas discharge source 120 may utilize any gas that discharge carbon dioxide. According to an embodiment of the present disclosure, the gas may be a mixture gas of a FOG generated in the fluidized bed reduction furnace 20 in the iron manufacturing process in the steel mill and the melting furnace gas that is an exhaust gas generated in the melting furnace 10.

The mixer 130 mixes a basic alkaline solution supplied from a basic alkaline solution storage 131 with water supplied from a water supply source 132, and supplies the mixture to the nozzle of the absorption tower 110.

The basic alkaline mixture solution in which the basic alkaline solution and the water are mixed with each other may be supplied by using a separately connected bypass line 136 when a supply amount or a required amount of the basic alkaline mixture solution is increased.

The basic alkaline solution and the water may be mixed in a ratio of 1:1 to 1:5. For example, the basic alkaline solution and the water may be mixed in a ratio of 1:1 to 1:4, 1:1 to 1:3, 1:1 to 1:2, 1:2 to 1:5, 1:2 to 1:3, or 1:3 to 1:5.

A carbon dioxide capture rate may be increased as the basic alkaline mixture solution mixing ratio of the basic alkaline solution and the water is increased, but the mixing ratio of the water may be adjusted in consideration of the cost aspect.

The basic alkaline mixture solution includes: at least one oxide selected from a group consisting of SiO₂, Al₂O₃, Fe₂O₃, TiO₂, MgO, MnO, CaO, Na₂O, K₂O, and P₂O₃; at least one metal selected from a group consisting of Li, Cr, Co, Ni, Cu, Zn, Ga, Sr, Cd, and Pb; and at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

The water supply source 132 may include all water that may be easily acquired at a system installation site and may be, for example, seawater.

An average pH of the basic alkaline mixture solution may be at least pH 12. For example, the pH may be pH 12 to pH 13.5, pH 12, pH 12.1, pH 12.2, or pH 12.3. The pH of the basic alkaline mixture solution may be measured by a pH meter in the absorption tower 110, and carbon dioxide cannot be captured anymore when the pH of the basic alkaline mixture solution in the absorption tower 110 is less than pH 10.5. Therefore, in order to adjust the pH of the basic alkaline mixture solution, the amount of the basic alkaline solution and the amount of water may be adjusted from zero to 100% by each valve 133 and 134 and the basic alkaline solution and the water may be supplied to the mixer 130.

When the level of the basic alkaline mixture solution in the absorption tower 110 is lower than 90% (measured by the level indicator), the input may be adjusted through a valve 135 at the mixer 130 so that the basic alkaline mixture solution is input. Furthermore, when the level of the solution reaches 100%, the input of the solution may be stopped. At the same time, the basic alkaline solution and the water may be mixed until the pH of the basic alkaline mixture solution becomes pH 12 to pH 13.5.

Since the amount of basic alkaline mixture solution supplied to the absorption tower 110 and the amount of the solution discharged from the separator 140 are the same, the carbon dioxide capturing system is capable of being continuously maintained. Therefore, the valve (including a bypass valve if necessary) 135 is adjusted so that the same amount of the basic alkaline mixture solution as a value of a flow meter mounted in the line from the absorption tower 110 to the separator 140 is supplied to the absorption tower 110, thereby making the net flow to zero.

The reactant containing carbon dioxide captured by reacting the basic alkaline mixture solution and the exhaust gas with each other is collected in the carbon dioxide capture part 111 of the absorption tower 100, the carbon dioxide reactant and the waste solution from the reactant are moved to the separator 140 through a valve 114, and the carbon dioxide reactant and the waste solution are separated from the reactant.

The separator 140 may include a centrifuge configured to separate the waste solution and the carbon dioxide reactant containing sodium carbonate (Na₂CO₃) or sodium bicarbonate (NaHCO₃) from the reactant, and may include a vibration separation membrane formed corresponding to a size of an inner circumference of a discharge pipe for discharging only sodium bicarbonate in the carbon dioxide reactant separated from the centrifuge, the vibration separation membrane having a surface provided with fine holes such that carbon bicarbonate is capable of passing therethrough. Through this, a high purity sodium bicarbonate can be acquired and can be sold immediately, so that a profit may be realized.

The size of the fine holes formed in the vibration separation membrane may be 10 µm to 20 µm, and the vibration separation membrane may further include a vibration generation part so as to induce vibration in the vibration separation membrane. The vibration generation part may be disposed so as to prevent the fine holes from being blocked by sodium bicarbonate.

The separated carbon dioxide reactant may be moved to the carbon resource storage unit 141, and may be recycled so as to be utilized for other purposes. For example, the carbon dioxide reactant may include sodium carbonate (Na₂CO₃) or sodium bicarbonate (NaHCO₃).

As described in Formula 1 below, the carbon dioxide reactant may be formed by reacting the basic alkaline mixture solution with carbon dioxide.

<Formula 1> 2NaOH + CO₂ → Na₂CO₃ + H₂O

Na₂CO₃ + H₂O + CO₂ → 2NaHCO₃

In the reactant, the waste solution other than the carbon dioxide reactant is moved to a wastewater treatment tank 142 and then is discarded. For example, the waste solution may include illite minerals, water, and so on that are contained in the basic alkaline mixture solution that has finished a catalyst function.

The carbon resource storage unit 141 is a carbon dioxide reactant storage unit considering that the steel mill is located on the beach for raw material procurement. Furthermore, the carbon resource storage unit 141 may store a carbon resource, which is a carbon dioxide capture reactant, more efficiently than a conventional carbon dioxide storage apparatus, while reducing the storage cost and the accommodation cost.

Specifically, the carbon resource storage unit 141 may include: an offshore structure accommodating the carbon dioxide reactant generated by reacting the basic alkaline mixture solution with carbon dioxide generated in the steel mill; an inlet unit configured to load the carbon dioxide reactant to the offshore structure; a discharge unit connected to the offshore structure and configured to unload the carbon dioxide reactant in the offshore structure; and a control unit configured to control the inlet unit or the discharge unit during loading/unloading of the carbon dioxide reactant accommodated in the offshore structure. Through this, the carbon resource may be more efficiently stored in the offshore structure, and the carbon resource may be withdrawn from the offshore structure and may be utilized when the stored carbon resource is required.

Preferably, the offshore structure is a floating offshore structure including a liquid transport carrier ship, but is not limited thereto, and may include any structure capable of performing various tasks such as floating or moving in the sea. Specifically, any one of an LNG FPSO, an LNG FSRU, an LNG transport ship, and an LNG RV may be selected as the offshore structure.

Meanwhile, the residual exhaust gas from which carbon dioxide is removed after carbon dioxide is captured in the carbon dioxide capture part 111 is discharged through the discharge part 150. According to an embodiment of the present disclosure, the residual exhaust gas discharged through the discharge part 150 is a reducing gas from which carbon dioxide is removed and is input into the fluidized bed reduction furnace 20, and the reducing gas has a low oxidation level, so that the DRI reduction rate may be increased.

In addition, since the concentration of carbon dioxide cannot exceed the regulatory standard value when the residual exhaust gas is discharged, the residual exhaust gas that does not exceed a standard (the standard set by a manager after the concentration of carbon dioxide in the atmosphere is measured) may be discharged on the basis of the concentration of carbon dioxide in the atmosphere to which the residual exhaust gas is discharged.

The reactor 100 may further include: a monitoring part 160 configured to monitor a level and a pH of the basic alkaline mixture solution in the absorption tower 110; and a control part 161 configured to adjust a supply amount of the basic alkaline mixture solution by the monitoring part 160.

Values of a gas meter, a pH meter, and a flow meter measured in all processes of the reactor 100 are managed in the monitoring part 160, and the control part 161 performs adjustment on the basis of the values represented by the monitoring part 160. The valves 114, 133, 134, and 135 may be adjusted in percentage with respect to values input from the control part 161.

In the system for carbon dioxide capture and carbon recycling for the steel mill according to the present disclosure, carbon dioxide may be reduced by capturing carbon dioxide in the exhaust gas generated during the iron manufacturing process in the steel mill, and the captured carbon dioxide may be recycled into other useful materials by converting the captured carbon dioxide into sodium carbonate or sodium bicarbonate.

Meanwhile, FIG. 5 is a view schematically illustrating a configuration of the absorption tower 110 for improving a carbon dioxide capture performance of the reactor 100 according to an embodiment of the present disclosure.

Referring to FIG. 5, in order to further improve the carbon dioxide capture performance, the absorption tower 110 according to an embodiment of the present disclosure may further include: a spraying apparatus including a spraying chamber 202 which is connected to the mixer 130 and inserted inside the absorption tower by penetrating a first region in the absorption tower and which is configured to receive the basic alkaline mixture solution, the spraying apparatus including a plurality of spraying pipes 205 which has a plurality of spraying holes for spraying the basic alkaline mixture solution and which is inclinedly connected to the spaying chamber 202; a fine droplet member 207 configured such that the basic alkaline mixture solution sprayed from the spraying apparatus is brought into contact with pores 206 and forms fine droplets when the basic alkaline mixture solution falls downward; and the baffle 208 having the plurality of slits or holes such that the exhaust gas is capable of being introduced inside the absorption tower with the uniform speed distribution.

The spraying chamber 202 may be inserted inside the absorption tower through the first region of the absorption tower and, at this time, the spraying chamber 202 may be mounted in a direction that crosses the absorption tower from a central axis of the absorption tower. The spraying chamber 202 may be a manifold connected to the mixer 130, the manifold being configured to evenly distribute the supplied basic alkaline mixture solution to the plurality of spraying pipes 205 that will be described later.

As illustrated in FIG. 5, the spraying pipe 205 is provided with the plurality of spraying pipes 205, and is connected to the spraying chamber 202 while having the plurality of spraying holes configured to allow the spraying chamber 202 to spray the supplied basic alkaline mixture solution. In addition, according to an embodiment of the present disclosure, the plurality of spraying pipes 205 is inclinedly connected to the spraying chamber 202. That is, an angle θ between the spraying chamber 202 and the plurality of spraying pipes 205 may be an acute angle.

As such, when the plurality of spraying pipes 205 inclinedly extends from the spraying chamber 202, a larger reduction agent spray area may be secured with the same number of spraying pipes 205 in the absorption tower.

That is, rather than a situation in which the plurality of spraying pipes 205 extends perpendicularly in a direction intersecting a longitudinal direction of the spraying chamber 202, in a situation in which the plurality of spraying pipes 205 inclinedly extends from the spraying chamber 202 as in an embodiment of the present disclosure, the same reduction agent spray area may be secured with a smaller number of spraying pipes 205, or a wider spray area of the basic alkaline mixture may be secured with the same number of spraying pipes 205.

The plurality of spraying pipes 205 may extend in two directions around the spraying chamber 202. In addition, the plurality of spraying pipes 205 may be arranged at equal intervals. Accordingly, the basic alkaline mixture solution supplied to the spraying chamber 202 may be evenly sprayed to all areas inside the absorption tower through the plurality of spraying pipes 202.

In addition, the plurality of spraying holes formed in any one of the spraying pipes 205 may be formed in a position that is symmetrically crossed with the plurality of spraying holes formed in the adjacent spraying pipe 205.

The spray hole sprays the basic alkaline mixture solution at a predetermined pressure. When the spray holes spray the basic alkaline mixture solution in directions opposite to each other, the basic alkaline mixture solution sprayed may collide with each other, and interference may occur in the air flow. However, according to an embodiment of the present disclosure, a collision or interference between the basic alkaline mixture solution sprayed from the plurality of spraying holes may be prevented by placing the plurality of spraying holes in a staggered position.

That is, the spraying apparatus including the spraying chamber 202 and the plurality of spraying pipes 205 may more effectively and uniformly mix a large amount of basic alkaline mixture solution with the exhaust gas discharged from the steel mill, and may also suppress interference in the air flow, the interference occurring when the basic alkaline mixture solution sprayed collides with each other.

According to an embodiment of the absorption tower 110 described above, the basic alkaline mixture solution may be formed as fine droplets by being in contact with the pores 206 of the fine droplet member 207 after the basic alkaline mixture solution falls from an upper portion to a lower portion of the absorption tower by the spraying apparatus, and then the basic alkaline mixture solution formed as the fine droplets may be in contact with the exhaust gas having fine particles by passing through the baffle 208 having the plurality of slits or holes. Through this, the carbon dioxide capture performance of the reactor 100 may be increased.

Although embodiments of the present disclosure have been described for illustrative purposes, those skilled in the art will appreciate that various modifications, additions and substitutions are possible, without changing the spirit or essential features of the present disclosure. Therefore, it should be understood that the embodiments described above are illustrative in all aspects and not restrictive. The scope of the present specification is characterized by the appended claims rather than the detailed description described above, and it should be construed that all alterations or modifications derived from the meaning and scope of the appended claims and the equivalents thereof fall within the scope of the present specification.

Meanwhile, the exemplary embodiments of the present specification are disclosed in the present specification and the drawings, and specific terms are used, but the specific terms are used as general meanings merely for easily explaining the technical contents of the present specification and helping understand the present disclosure, but not intended to limit the scope of the present specification. It is obvious to those skilled in the art to which the present specification pertains that other modified embodiments may be carried out on the basis of the technical spirit of the present specification in addition to the exemplary embodiments disclosed herein.

### Industrial Applicability

In the present disclosure, the system for carbon dioxide capture and carbon recycling for the steel mill configured to efficiently reduce carbon dioxide discharged during the iron manufacturing process that is one process of the steel manufacturing process and configured to recycle the captured carbon dioxide into other useful materials may be provided.

In addition, since the system for carbon dioxide capture and carbon recycling for the steel mill according to the present disclosure is easily applicable to a steel mill that has introduced a conventional FINEX process, the system capable of reducing carbon dioxide, which is a representative harmful substance that affects global warming, in the exhaust gas generated in the FINEX process of a steel mill process may be provided.

In addition, in the system for carbon dioxide capture and carbon recycling for the steel mill according to the present disclosure, a problem of a CO₂ PSA technology that has been widely used for reducing carbon dioxide discharged from a steel mill is solved, so that a profit generating effect by manufacturing a carbon resource utilized in various industrial fields such as food additives, detergents, soap raw materials, high-tech medical industries, wastewater treatment, and so on may also be expected, the carbon resource being manufactured from carbon dioxide captured through a carbon dioxide capture facility.

In addition, the carbon dioxide reactant generated from the system for carbon dioxide capture and carbon recycling for the steel mill according to the present disclosure may be effectively stored and transported in the offshore structure, so that manufacturing and transportation costs may be reduced compared to a conventional carbon dioxide storage apparatus.

The present disclosure has a sufficient possibility for marketing or sales of the carbon dioxide capture and carbon recycling system for steel mills in steel industries recognized as the main sources of greenhouse gas emissions, and is also feasible to the extent that the present disclosure is capable of being clearly realized in reality, so that the present disclosure has industrial applicability.

## Claims

1. A system for carbon dioxide capture and carbon recycling for a steel mill, the system comprising:
at least one fluidized bed reduction furnace configured to reduce fine iron ore to reduced iron by reacting the fine iron ore with a reducing gas;
a first discharge means configured to discharge an exhaust gas generated from the at least one fluidized bed reduction furnace;
a melting furnace connected to the fluidized bed reduction furnace and configured to manufacture molten iron by melting the reduced iron manufactured in the fluidized bed reduction furnace;
a second discharge means configured to discharge an exhaust gas generated from the melting furnace; and
a reactor connected respectively to the first discharge means and the second discharge means, the reactor being configured such that when the reactor receives the exhaust gas respectively discharged from the fluidized bed reduction furnace and the melting furnace as the reducing gas, the reactor captures carbon dioxide in the reducing gas by reacting the reducing gas with a basic alkaline mixture solution, and then collects a reactant containing the captured carbon dioxide and injects, into the fluidized bed reduction furnace, the reducing gas from which carbon dioxide is removed,
wherein the reactor is configured to separate a carbon dioxide reactant and a waste solution from the reactant, and is configured to store the separated carbon dioxide reactant so as to recycle the carbon dioxide reactant.

2. The system of claim 1, wherein the reducing gas is a mixture gas of a FINEX OFF GAS (FOG) that is the exhaust gas generated from the fluidized bed reduction furnace and a melting furnace exhaust gas that is the exhaust gas generated from the melting furnace.

3. The system of claim 1, wherein the basic alkaline mixture solution comprises:
at least one oxide selected from a group consisting of SiO₂, Al₂O₃, Fe₂O₃, TiO₂, MgO, MnO, CaO, Na₂O, K₂O, and P₂O₃;
at least one metal selected from a group consisting of Li, Cr, Co, Ni, Cu, Zn, Ga, Sr, Cd, and Pb; and
at least one liquid compound selected from a group consisting of sodium tetraborate (Na₂B₄O₇·10H₂O), sodium hydroxide (NaOH), sodium silicate (Na₂SiO₃), potassium hydroxide (KOH), and hydrogen peroxide (H₂O₂).

4. The system of claim 1, wherein the reactor comprises:
a mixer configured to supply the basic alkaline mixture solution;
an absorption tower configured to capture carbon dioxide in the exhaust gas by reacting the basic alkaline mixture solution supplied from the mixer with the exhaust gas in which micro bubbles are formed by passing through a bubbler formed on a lower portion of the absorption tower;
a separator configured to collect a reactant containing carbon dioxide captured in the absorption tower and to separate the carbon dioxide reactant and the waste solution from the reactant; and
a carbon resource storage unit storing the separated carbon dioxide reactant for recycling the carbon dioxide reactant.

5. The system of claim 4, wherein the mixer is configured to generate the basic alkaline mixture solution by mixing a basic alkaline solution supplied from a basic alkaline solution storage with water supplied from a water supply source.

6. The system of claim 5, wherein the basic alkaline solution and the water are mixed in a ratio of 1:1 to 1:5.

7. The system of claim 4, wherein an average pH of the basic alkaline mixture solution is pH 12 to pH 13.5.

8. The system of claim 4, wherein the basic alkaline mixture solution is input by being adjusted through a valve in the mixer when a level of the basic alkaline mixture solution in the absorption tower is lowered to less than 90%, and inputting of the basic alkaline mixture solution is stopped and, at the same time, the basic alkaline solution and water are mixed until a pH of the basic alkaline mixture solution becomes pH 12 to pH 13.5 when the level of the basic alkaline mixture solution becomes 100%.

9. The system of claim 4, wherein the bubbler is configured to form exhaust gas micro bubbles by using the exhaust gas.

10. The system of claim 4, wherein the absorption tower comprises:
a spraying apparatus including a spraying chamber which is connected to the mixer and inserted inside the absorption tower by penetrating a first region in the absorption tower and which is configured to receive the basic alkaline mixture solution, the spraying apparatus including a plurality of spraying pipes which have a plurality of spraying holes for spraying the basic alkaline mixture solution and which is inclinedly connected to the spaying chamber;
a fine droplet member configured such that the basic alkaline mixture solution sprayed from the spraying apparatus is brought into contact with pores and forms fine droplets when the basic alkaline mixture solution falls downward; and
a baffle having a plurality of slits or holes such that the exhaust gas is capable of being introduced inside the absorption tower with a uniform speed distribution.

11. The system of claim 10, wherein the plurality of spraying holes formed in any one of the plurality of spraying pipes is formed in a position symmetrically staggered with the plurality of spraying holes formed in the adjacent spraying pipes.

12. The system of claim 1, wherein the carbon dioxide reactant comprises sodium carbonate (Na₂CO₃) or sodium bicarbonate (NaHCO₃).

13. The system of claim 4, wherein the separator comprises:
a centrifuge configured to separate the waste solution and the carbon dioxide reactant containing sodium carbonate (Na₂CO₃) or sodium bicarbonate (NaHCO₃) from the reactant; and
a vibration separation membrane formed corresponding to an inner circumference of a discharge pipe for discharging only sodium bicarbonate in the carbon dioxide reactant, the vibration separation membrane having a surface provided with fine holes formed in a size capable of allowing carbon bicarbonate to pass therethrough.

14. The system of claim 4, wherein the reactor further comprises:
a monitoring part configured to monitor a level and a pH of the basic alkaline mixture solution in the absorption tower; and
a control part configured to adjust a supply amount of the basic alkaline mixture solution by the monitoring part.

15. The system of claim 4, wherein the carbon resource storage unit comprises:
an offshore structure accommodating the carbon dioxide reactant;
an inlet unit configured to load the carbon dioxide reactant to the offshore structure;
a discharge unit connected to the offshore structure and configured to unload the carbon dioxide reactant in the offshore structure; and
a control unit configured to control the inlet unit and the discharge unit during loading/unloading of the carbon dioxide reactant accommodated in the offshore structure.

16. The system of claim 15, wherein the offshore structure is any one selected from an LNG FPSO, an LNG FSRU, an LNG transport ship, and an LNG RV.
